# EUROPÄISCHE PATENTSCHRIFT

(11) **EP 2 154 483 B1**
(45) Veröffentlichungstag und Bekanntmachung des Hinweises auf die Patenterteilung: **19.10.2011**
(21) Anmeldenummer: 09162808.1
(22) Anmeldetag: 16.06.2009
(51) Int. Cl.: G01C 21/36

(54) **Verfahren zur Eingabe von Zielen in ein Navigationssystem**
Method for entering destinations into a navigation system
Procédé d'entrée de cibles dans un système de navigation

(30) Priorität: 14.08.2008 DE 102008041256
(43) Veröffentlichungstag der Anmeldung: 17.02.2010
(73) Patentinhaber: ROBERT BOSCH GMBH, 70442 Stuttgart (DE)
(72) Erfinder: Xu, Yonglong, 215021, Suzhou Industrial Park (CN)

(56) Entgegenhaltungen:
- EP-A2- 0 789 224
- EP-A2- 1 120 633
- EP-A2- 1 930 697
- US-A- 5 059 965
- US-A1- 2008 133 123
- US-B1- 6 738 952

## Beschreibung

### Technisches Gebiet

Die Erfindung betrifft ein Verfahren zur Eingabe von Zielen in ein Navigationssystem, insbesondere für Kraftfahrzeuge, bei dem in einen Zielspeicher Zielobjekte, die jeweils aus mehreren hintereinander angeordneten Wörtern bestehen, die wiederum jeweils aus einem oder mehreren hintereinander angeordneten Zeichen bestehen, abgelegt werden und bei dem im Rahmen der Zieleingabe ein Zeichen des zu suchenden Ziels eingegeben wird, um das Ziel mit den im Zielspeicher befindlichen Zielobjekten zu vergleichen bzw. um festzustellen, ob das Ziel im Zielspeicher vorhanden ist oder nicht. Weiterhin betrifft die Erfindung ein Navigationssystem zur Durchführung des genannten Verfahrens.

Unter dem Begriff "Ziel" sind Zielorte, ggf. einschl. Adressen und Einrichtungen (sogenannte Sonderziele), zu verstehen, die ein Benutzer erreichen will und ins Navigationsgerät eingibt. Zielobjekte sind die im System bzw. Zielspeicher abgelegten Zielorte. Ein Ziel bzw. Zielobjekt wird durch ein oder mehrere Merkmale beschrieben. Eins davon stellt sein Name zum Identifizieren des Ziels dar. Der Name besteht aus einem oder mehreren Wörtern, wobei jedes Wort wiederum aus einem oder mehreren Zeichen besteht. Z. B. können Zeichen Buchstaben sein. Unter dem Ausdruck "mehrere Wörter" sind im Rahmen der vorliegenden Erfindung zwei oder mehr Wörter zu verstehen. Neben Namen können Wörter auch Bestandteile von Adressen und Ähnlichem sein.

Bei Navigationssystemen möchte der Nutzer häufig ein Ziel über seinen Namen im Zielspeicher finden. Als Ergebnis wird entweder das Ziel gefunden oder nicht und es wird ggf. ein anderes Ziel ausgewählt.

### Stand der Technik

Fahrzeugnavigationsgeräte zum Betrieb in Kraftfahrzeugen, die nach Eingabe eines Fahrzieles auf Grundlage von Karteninformationen eine Route von einem aktuellen Fahrzeugstandort, der bspw. durch Auswertung von GPS-Satellitensignalen bestimmt wird, zum eingegebenen Fahrzielort berechnen und dem Fahrzeugführer bzw. Benutzer mittels Fahranweisungen entlang der berechneten Route führen, sind aus dem Stand der Technik hinlänglich bekannt. So ist bspw. ein Verfahren zur Eingabe von Zielen in ein Navigationssystem der eingangs genannten Art aus der DE 100 03 737 A1 / EP 1 120 633 C2, der US 5,059,965 A oder der US 2008/133123 A1 bekannt. Wird bei dem dort beschriebenen Verfahren ein erstes Zeichen eines Zieles in das Navigationssystem eingegeben, wird dieses Zeichen, das im Normalfall ein Buchstabe eines Alphabets oder dergleichen darstellt, mit dem jeweils ersten bzw. am Anfang angeordneten Zeichen der ersten bzw. am Anfang stehenden Wörter der im Zielspeicher abgelegten Zielobjekte verglichen. Mit anderen Worten wird bei den bekannten Verfahren immer nur das erste Zeichen der einzelner Wörter der einzelnen Zielobjekte jeweils mit den eingegebenen Zeichen verglichen, wobei die eingegebenen Zeichen jeweils das erste Zeichen der Wörter des zu suchenden Zieles darstellen. Für die Zwecke der vorliegenden Erfindung wird als erstes Wort eines Zielobjekts das am weitesten links angeordnete Wort des jeweiligen Zielobjekts verstanden.

Für den Fall, dass die verglichenen Zeichen übereinstimmen, wird das jeweilige Zielobjekt markiert bzw. ausgewählt und in einer separaten Liste abgespeichert. Wird nun ein weiteres Zeichen eingegeben, wird dieses mit dem ersten Zeichen des zweiten Wortes der in der separaten Liste zwischengespeicherten Zielobjekte verglichen. Diese Schritte können beliebig häufig wiederholt werden, bis alle Wörter des jeweilig einzugebenden Ziels erkannt sind.

Der Vergleich mehrerer eingegebener Zeichen eines gesuchten Zieles mit den Namen der Zielobjekte erfolgt daher bei den bekannten Verfahren durch Vergleich des ersten eingegebenen Zeichens mit dem ersten Zeichen des ersten Wortes der Zielobjekte, des zweiten eingegebenen Zeichens mit dem ersten Zeichen des zweiten Wortes derjenigen Zielobjekte, für die für das vorhergehend eingegebene Zeichen eine Übereinstimmung festgestellt worden ist, usw.

In einigen Fällen kann es nun aber passieren, dass dem Benutzer nur Teile des Namens des jeweiligen Fahrziels bekannt sind oder ein Ziel mehrere Namen (z.B. Frankfurt, Frankfurt am Main, Frankfurt a.m.) hat, die aber u. U. nicht komplett erfasst und somit im Zielspeicher nicht komplett vorhanden sind. Auch kann der Name eines im Zielspeicher befindlichen Zielobjektes korrumpiert bzw. unvollständig sein. In derartigen Fällen würden die gewünschten Fahrziele mit den bekannten Verfahren nicht aufgefunden werden können, insbesondere wenn der bekannte Teil des gesuchten Zieles nicht das erste Wort umfasst.

Die US-PS 6,7389,52 B1 schlägt bereits ein Verfahren zur Eingabe von Zielen in ein Navigationssystem vor, bei dem in einen Zielspeicher Zielobjekte, die aus mehreren hintereinander angeordneten Wörtern bestehen, die wiederum aus einem oder mehreren hintereinander angeordneten Zeichen bestehen, abgelegt werden und zur Zielermittlung ein Zeichen eingegeben wird, wobei das eingegebene Zeichen mit an einer vorherbestimmten ersten Position innerhalb der Wörter der im Zielspeicher abgelegten Zielobjekte angeordneten Zeichen auf Übereinstimmung verglichen wird und wobei das erste eingegebene Eingabezeichen mit einem Zeichen jedes Wortes vergleichbar ist. Weiterhin ist vorgesehen, dass zur Bestimmung des gewünschten Zieles die Vergleichsergebnisse der ersten Position hierarchisch mit den Vergleichsergebnissen der zweiten Position verknüpft werden.

Vergleichbare Verfahren sind aus der EP 0 789 224 A2 oder der EP 1 930 697 A2 bekannt.

### Darstellunq der Erfindung: Aufgabe, Lösung, Vorteile

Angesichts der obigen Ausführung liegt der Erfindung die Aufgabe zugrunde, ein Verfahren der eingangs genannten Art anzugeben, mit dem die Zielfindung verbessert wird.

Diese Aufgabe wird mit den Merkmalen des Anspruchs 1 gelöst. Vorteilhafte Ausgestaltungen der Erfindung sind in den abhängigen Ansprüchen angegeben.

Zur Durchführung des Verfahrens wird das eingegebene Zeichen mit an einer vorherbestimmten ersten Position innerhalb der Wörter der im Zielspeicher abgelegten Zielobjekte angeordneten Zeichen auf Übereinstimmung verglichen, wobei das erste eingegebene Eingabezeichen mit einem Zeichen jedes Wortes verglichen wird. Die eingebbaren Zeichen sind ausschließlich diejenigen Zeichen, die an der vorherbestimmten ersten Position innerhalb der Wörter der im Zielspeicher abgelegten Zielobjekte angeordnet sind. Die Kernidee der Erfindung ist somit, dass ein eingegebenes Zeichen nicht nur mit einem Zeichen eines Wortes der gespeicherten Zielobjekte, insbesondere mit dem am Anfang der Worte stehenden Zeichen, verglichen wird, sondern darüber hinaus mit Zeichen aller Wörter, insbesondere wenn für das erste Wort keine Übereinstimmung gefunden wurde. Hierdurch wird vorteilhafterweise die Menge der übereinstimmenden Ergebnisse gegenüber den aus dem Stand der Technik bekannten Verfahren vergrößert. Insbesondere ist es so möglich, Zielobjekte zu ermitteln, bei denen der Benutzer nicht das Anfangswort, sondern nur einen Teilbereich des gesuchten Zielobjekts kennt. Die Menge der möglichen Treffer wird demnach gegenüber dem Stand der Technik vergrößert, so dass insgesamt eine tolerantere Suche durchgeführt werden kann.

Wird nun ein Zeichen eines Wortes eines Zieles in das Navigationssystem eingegeben, wird eine Übereinstimmung mit dem gesuchten Ziel erzielt, unabhängig davon ob dieses Zeichen das Zeichen in der vorherbestimmten Position des ersten, letzten oder eines sonstigen Wortes des Zieles ist.

Sodann wird ein weiteres Zeichen des Wortes eingegeben, welches mit an einer vorherbestimmten zweiten Position innerhalb derjenigen Wörter, bei denen für das erste eingegebene Zeichen eine Übereinstimmung festgestellt worden ist, angeordneten Zeichen auf Übereinstimmung verglichen wird. Mit anderen Worten gibt der Benutzer ein Zeichen des ihm bekannten Wortes, von dem er bereits mit der ersten Eingabe ein Zeichen angegeben hatte, ein, wobei das zweite eingegebene Zeichen dasjenige Zeichen ist, das an einer vorherbestimmten zweiten Position innerhalb des Wortes angeordnet ist. Hierdurch kann insbesondere in Situationen, in denen einem Benutzer nur ein Wort oder wenige Worte eines Zielobjekts bekannt sind, ein schnelles und einfaches Auffinden des gesuchten Zielobjektes sichergestellt werden. In diesem Falle sind die eingebaren Zeichen ausschließlich diejenigen Zeichen, die sich an der zweiten Position innerhalb derjenigen Worte befinden, bei denen für das erste Eingabezeichen eine Übereinstimmung erzielt wurde.

Erfindungsgemäß ist vorgesehen, dass die erste Position das erste Zeichen innerhalb eines jeden Wortes und die zweite Position das letzte Zeichen innerhalb eines jeden Wortes anzeigt. Unter dem Ausdruck "erstem Zeichen" ist das am Anfang stehende bzw. am weitesten links angeordnete Zeichen eines jeweiligen Wortes anzusehen, während unter dem letzten Zeichen das am Ende bzw. am weitesten rechts angeordnete Zeichen eines Wortes zu verstehen ist.

Je nachdem welche Sprachen im jeweiligen Anwendungsfall verwendet werden, sind die Vergleichsergebnisse der ersten Position hierarchisch in geeigneter Weise mit den Vergleichsergebnissen der zweiten Position zu verknüpfen, so dass eine optimale Trefferauswahl bzw. Treffersortierung erreicht werden kann. Unter Vergleichsergebnissen sind diejenigen ermittelten Zielobjekte zu verstehen, bei denen der Vergleich der Zeichen eine Übereinstimmung ergeben hat.

Bei einer weiteren bevorzugten Ausführungsform der Erfindung werden diejenigen Zielobjekte, die Wörter umfassen, für die für das erste eingegebene Zeichen eine Übereinstimmung erzielt worden ist, in einem Zwischenspeicher abgelegt. Wenn in einem nächsten Schritt ein weiteres, zweites Zeichen eingegeben wird, wird dieses Zeichen nur noch mit Zeichen derjenigen Wörter verglichen, die in den im Zwischenspeicher abgelegten Zielobjekten enthalten sind und die nachfolgend zu einem Wort angeordnet sind, für das für das vorher eingegebene Zeichen (erstes eingegebenes Zeichen) eine Übereinstimmung erzielt worden ist. Somit werden bei dieser Ausführungsform in einem zweiten Schritt nur noch diejenigen Wörter mit dem zweiten eingegebenen Zeichen verglichen, die einem Wort nachfolgen, für das bereits ein Treffer erzielt worden ist. Somit kann die Iteration im zweiten Verfahrensschritt verkürzt und das gesuchte Zielobjekt schneller gefunden werden. Die mit dem zweiten eingegebenen Zeichen zu vergleichenden Zeichen der Wörter sind zweckmäßigerweise an der vorherbestimmten, ersten Position innerhalb der Wörter angeordnet. Beispielsweise kann dies jeweils die erste Position innerhalb eines Wortes sein. Wird ein weiteres Zeichen des gewünschten Zieles eingegeben, ist analog zu verfahren und das eingegebene Zeichen mit dem Zeichen derjenigen Wörter zu vergleichen, die den Wörtern nachfolgen, für die für das zweite bzw. das vorherig eingegebene Zeichen eine Übereinstimmung erzielt worden ist.

Um die Suche nach dem gewünschten Zielobjekt weiter einzuschränken und damit zu beschleunigen, ist es bevorzugt, die Zieleingaben unter Auswahl verschiedener Kategorien durchzuführen. Den Kategorien sind jeweils Zielobjekte zugeordnet. Als Kategorien können bspw. Länder, Ortsnamen, Straßennamen, Einrichtungen oder bekannte Punkte vorgesehen sein. Der Benutzer kann zunächst zur Eingabe eines Ziels bzw. eines Wortes oder Teilnamens eines Ziels und anschließend zur Auswahl einer Kategorie oder zunächst zur Auswahl einer Kategorie und anschließend zur Eingabe eines Ziels bzw. Worts oder Teilnamens eines Ziels aufgefordert werden.

Alternativ oder zusätzlich kann die Zieleingabe unter Auswahl verschiedener Schlagwörter erfolgen, denen jeweils Zielobjekte zugeordnet sind.

Bei dem erfindungsgemäßen Verfahren wird nach Eingabe des Ziels eine Liste der ermittelten Zielobjekte erstellt. Insbesondere wenn die Liste eine vorherbestimmte, maximale Anzahl von Zielobjekten, bspw. die maximal anzeigbare Anzahl von Zielobjekten, aufweist, wird sie zweckmäßigerweise im Hinblick auf vorgegebene Parameter, insbesondere bzgl. der Streckenlänge zwischen jeweiligen Zielobjekt und aktuellem Standort eines Benutzers, sortiert.

Ferner ist erfindungsgemäß ein Navigationssystem, insbesondere für Kraftfahrzeuge, mit einer Steuereinrichtung vorgesehen, wobei die Steuereinrichtung zur Durchführung des erfindungsgemäßen Verfahrens ausgebildet ist.

### Kurze Beschreibung der Zeichnungen

Die Erfindung wird im Folgenden unter Bezugnahme auf die Figuren näher erläutert. Es zeigen schematisch:
- Fig. 1: ein Blockschaltbild eines Fahrzeugsnavigationssystems, und
- Fig. 2: ein Ablaufdiagramm des erfindungsgemäßen Verfahrens.

### Bevorzugte Ausführung der Erfindung

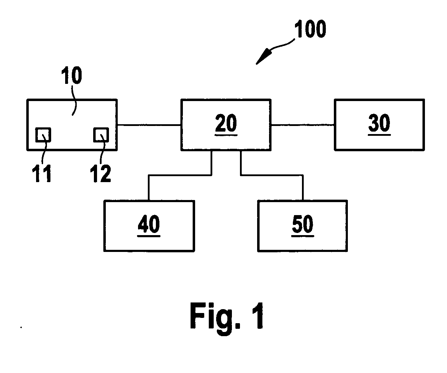

Fig. 1 zeigt ein Fahrzeugnavigationssystem als Blockdiagramm, das mit dem Bezugszeichen 100 versehen ist.

Zentraler Bestandteil des Fahrzeugnavigationssystems 100 ist eine Steuereinrichtung 20 zur Steuerung der Gerätefunktion, insbesondere der Navigationsgerätefunktion, nämlich der Berechnung einer Fahrroute von einem aktuellen Fahrzeugstandort zu einem Fahrzielort aufgrund von Karteninformationen, die in einem angeschlossenen Massenspeicher 50, der bspw. als CD-ROM-Lesegerät mit eingelegter Karten-CD-ROM ausgebildet sein kann, abgelegt sind und der Ausgabe von Fahranweisungen in Abhängigkeit des aktuellen Fahrzeugstandortes relativ zu der berechneten Fahrtroute zur Leitung des Fahrzeugführers entlang der Fahrtroute. Die Steuereinrichtung 20 ist zur Durchführung des nachfolgend beschriebenen erfindungsgemäßen Verfahrens ausgebildet.

Dazu ist die Steuereinrichtung 20 an eine Eingabeeinheit 10 angeschlossen, die über die zur Eingabe von Zeichen eines Alphabets und zur Erzeugung mindestens eines weiteren Befehls, nämlich eines Bestätigungsbefehls, erforderlichen Mittel verfügt. Insbesondere sind für das vorliegende Ausführungsbeispiel als Eingabemittel Cursor-Steuertasten 11 sowie eine Bestätigungstaste 12 vorgesehen. Die gewünschten Zeichen bzw. Buchstaben können dadurch vom Benutzer in bekannter Weise ausgewählt und eingegeben werden.

Ferner ist die Steuereinrichtung 20 an eine Anzeigeeinheit 30 und einen Zwischenspeicher 40 angeschlossen. Der Massenspeicher 50 stellt im vorliegenden Beispiel den Zielspeicher dar, in dem die Gesamtmenge der möglichen Zielobjekte abgespeichert ist. Im Zwischenspeicher 40 kann hingegen eine Teilmenge der im Zielspeicher 50 enthaltenen Informationen abgespeichert werden. Darüber hinaus beinhaltet der Massenspeicher 50 Karteninformationen und dergleichen.

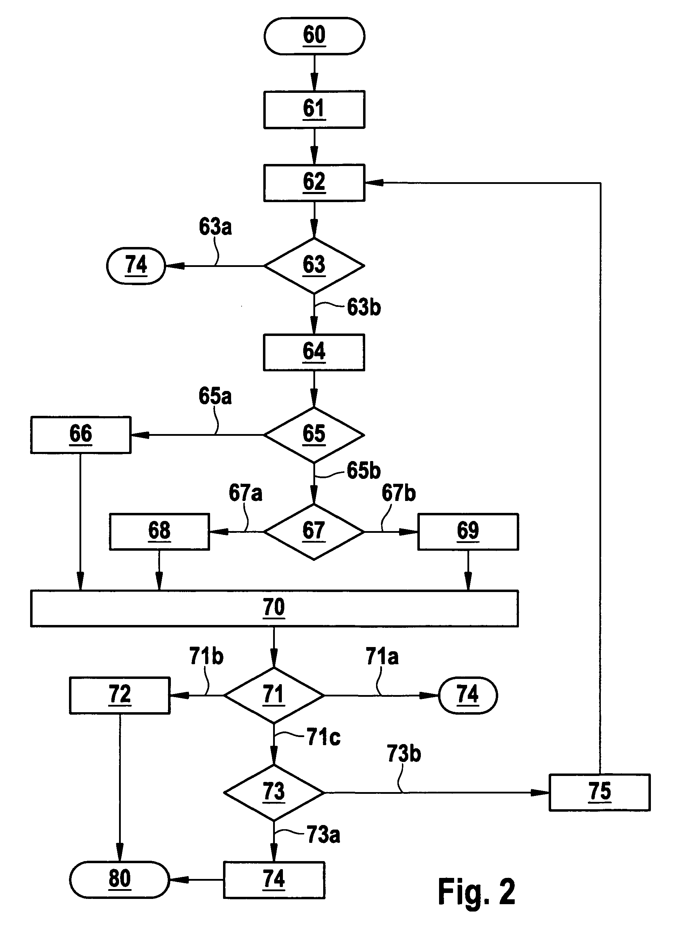

Fig. 2 zeigt ein Ablaufdiagramm eines Ausführungsbeispiels des erfindungsgemäßen Verfahrens. Das zu suchende Ziel wird als SZ bezeichnet, während ein Zielobjekt aus der Zielliste als OZ kennzeichnet wird. Die Zielliste enthält die im Massenspeicher 50 abgespeicherte Menge aller Zielobjekte, die jeweils aus mehreren Wörtern besteht. Jedes Wort besteht aus einem oder mehreren Zeichen, bspw. Buchstaben.

Bei der Suche von SZ im Zielspeicher wird der SZ-Name ins Navigationssystem eingegeben, und zwar Wort für Wort, d.h. zunächst das erste Wort des SZ-Namens, dann das zweite Wort des SZ Namens, usw., bis der SZ-Name gefunden oder nicht gefunden ist. Bei Eingabe eines Wortes des SZ-Namens werden nicht alle Zeichen des Wortes nacheinander eingegeben. Es wird stattdessen stets nur ein Zeichen des Wortes eingegeben, welches beim First-Letter-Input stets das erste Zeichen des Wortes darstellt, beim Second-Letter-Input stets das zweite Zeichen des Wortes darstellt, usw.

Im Schritt 60 wird das Verfahren begonnen und im Schritt 61 wird die Initialisierung wie folgt durchgeführt:
- Die Wortposition (pwo) im Namen eines OZ wird auf 0 gesetzt, so dass für alle OZ die Suche mit dem ersten Wort beginnt.
- Die Wortposition (pws) im SZ-Namen wird auf 1 gesetzt, so dass zuerst das erste Wort des SZ-Namens eingegeben wird.
- Die Zeichenposition (pz1) wird gesetzt, so dass das Zeichen an der Position pz1 einzelner Wörter des SZ-Namens eingegeben wird. Bei pz1=1 wird von First-Letter-Input gesprochen.
- Die Trefferliste wird initialisiert, so dass eine leere Trefferliste generiert wird.

In Schritt 62 wird das auf der Anzeigeeinrichtung 30 angezeigte Eingabefeld initialisiert, so dass lediglich die Zeichen an der Position pz1 innerhalb der nach der jeweiligen Position pwo kommenden Wörter der einzelnen OZ-Namen aktiv sind. Ferner wird festgestellt, dass das zu suchende Wort (SW) des SZ-Namens das Wort des SZ-Namens an der Position pws und der einzugebende Buchstabe (EB) des SW das Zeichen des SW an der Position pz1 ist.

In Schritt 63 wird festgestellt, ob das Zeichen EB im Wort SW des SZ-Namens ein aktives Zeichen im Eingabefeld ist. Ist dies nicht der Fall (63a), ist das SZ nicht gefunden und das Verfahren wird im Schritt 74 weitergeführt.
Ansonsten (63b) wird im Schritt 64 das Zeichen eingegeben bzw. ausgewählt.

Im Schritt 65 wird festgestellt, ob das Wort SW das erste Wort des SZ-Namens ist. Ist dies der Fall (pws=1 (65a)), wird im Schritt 66 das Zeichen EB mit dem Zeichen an der Position pz1 aller Wörter des Namens eines OZ verglichen.
Ansonsten (pws>1 (65b)) wird im Schritt 67 festgestellt, ob das Wort SW im vollständigen Namen des SZ unmittelbar dem Wort an der Position pws-1 des SZ-Namens folgt oder die Namen der betroffenen OZ unvollständig bzw. korrupt sein könnten. Ist dies der Fall (67a), wird im Schritt 68 das Zeichen EB mit dem Zeichen an der Position pz1 des Wortes an der Position (pwo+1) eines OZ-Namens verglichen.
Ansonsten (67b) wird im Schritt 69 das Zeichen EB mit dem Zeichen an der Position pz1 aller Wörter nach der Position pwo eines OZ-Namens verglichen.

Bei Übereinstimmung bei einem Wort im OZ-Namen wird in Schritt 70 das OZ in die Trefferliste aufgenommen und dabei wird die Position des Wortes (pwo) notiert bzw. aktualisiert. Dies wird dann wiederholt für alle Zielobjekte in der Zielliste. Für unterschiedliche Ziele in der Trefferliste kann pwo unterschiedlich sein und die resultierende Trefferliste beim Schritt 69 kann größer als beim Schritt 68 sein.

In Schritt 71 wird festgestellt, ob die Trefferliste leer ist. Ist dies der Fall (71 a), ist das SZ nicht gefunden und das Verfahren wird im Schritt 74 weitergeführt.

Ansonst (71 b) wählt der Benutzer im Schritt 72 ein Ziel in der Trefferliste aus, welches entweder SZ oder ein anderes Ziel als SZ ist, und beendet damit im Schritt 80 die gesamte Suche.

Wählt der Benutzer kein Ziel aus der Trefferliste aus (71 c), wird im Schritt 73 festgestellt, ob das Wort an der Wortposition (pws) das letzte im SZ-Namen ist. Ist dies der Fall (73a), ist das SZ nicht gefunden, in Schritt 74 wird eine entsprechende Mitteilung mittels der Anzeigevorrichtung 30 an den Benutzer ausgegeben und die gesamte Suche wird in Schritt 80 beendet.

Ansonsten (73b) wird die Wortposition (pws) im SZ-Namen um 1 erhöht (pws = pws + 1). In Schritt 75 wird dann der Inhalt der Zielliste gelöscht und sämtliche in der Trefferliste vorhandenen Zielobjekte in der Zielliste abgespeichert. Anschließend wird der Inhalt der Trefferliste gelöscht. Die nächste Iteration beginnt im Schritt 62.

In einem weiteren Ausführungsbeispiel kann beim Schritt 70, bevor das betroffene OZ bei Übereinstimmung in die Trefferliste aufgenommen wird, ein weiterer Buchstabe an einer weiteren Position pz2 des betroffenen Wortes des SZ-Namens eingegeben und mit dem Buchstaben an der Position pz2 des betroffenen Wortes des OZ-Namens verglichen werden, wobei die Zeichenposition pz2 anders als die Zeichenposition pz1 ist. Erst bei erneuter Übereinstimmung wird das OZ in die Trefferliste aufgenommen.

Besonders bevorzugt ist es, dass die erste Zeichenposition (pz1) auf 1 und die zweite Zeichenposition (pz2) auf das letzte Zeichen einzelner Wörter gesetzt werden.

## Patentansprüche

1. Verfahren zur Eingabe von Zielen in ein Navigationssystem, insbesondere für Kraftfahrzeuge, bei dem in einen Zielspeicher Zielobjekte, die aus mehreren hintereinander angeordneten Wörtern bestehen, die wiederum aus einem oder mehreren hintereinander angeordneten Zeichen bestehen, abgelegt werden und zur Zielermittlung ein Zeichen eingegeben wird, wobei das eingegebene Zeichen mit an einer vorherbestimmten ersten Position innerhalb der Wörter der im Zielspeicher abgelegten Zielobjekte angeordneten Zeichen auf Übereinstimmung verglichen wird und wobei das erste eingegebene Eingabezeichen mit einem Zeichen jedes Wortes verglichen wird,. ein weiteres Zeichen eingegeben wird, welches mit an einer vorherbestimmten zweiten Position innerhalb derjenigen Wörter angeordneten Zeichen auf Übereinstimmung verglichen wird, bei denen für das eine eingegebene Zeichen eine Übereinstimmung festgestellt worden ist, **dadurch gekennzeichnet, dass** die erste Position das erste Zeichen innerhalb eines jeden Wortes und die zweite Position das letzte Zeichen innerhalb eines jedes Wortes anzeigt.

2. Verfahren nach Anspruch 1, **dadurch gekennzeichnet, dass** zur Bestimmung des gewünschten Zieles die Vergleichsergebnisse der ersten Position hierarchisch mit den Vergleichsergebnissen der zweiten Position verknüpft werden.

3. Verfahren gemäß Anspruch 1, wobei die Zielobjekte, die Wörter umfassen, für die für das eine eingegebene Zeichen eine Übereinstimmung erzielt worden ist, in einem Zwischenspeicher abgelegt werden, **dadurch gekennzeichnet, dass** ein weiteres Zeichen eingegeben wird, wobei das weitere Zeichen mit an der vorherbestimmten ersten Position angeordneten Zeichen derjenigen Wörter auf Übereinstimmung verglichen wird, die zu Zielobjekten gehören, die in dem Zwischenspeicher abgelegt worden sind und die nachfolgend zu einem Wort angeordnet sind, für das für das eine Zeichen eine Übereinstimmung erzielt worden ist.

4. Verfahren gemäß einem der vorhergehenden Ansprüche, **dadurch gekennzeichnet, dass** die Zieleingabe unter Auswahl verschiedener Kategorien erfolgt, denen jeweils Zielobjekte zugeordnet sind.

5. Verfahren gemäß Anspruch 4, **dadurch gekennzeichnet, dass** ein Benutzer zunächst zur Eingabe eines Ziels und anschließend zur Auswahl einer Kategorie oder zunächst zur Auswahl einer Kategorie und anschließend zur Eingabe eines Ziels aufgefordert wird.

6. Verfahren gemäß einem der vorhergehenden Ansprüche, **dadurch gekennzeichnet, dass** die Zieleingabe unter Auswahl verschiedener Schlagwörter erfolgt, denen jeweils Zielobjekte zugeordnet sind.

7. Verfahren gemäß einem der vorhergehenden Ansprüche, wobei nach Eingabe des Ziels eine Liste der ermittelten Zielobjekte erstellt wird, **dadurch gekennzeichnet, dass** die Liste, insbesondere bei Überschreitung einer vorherbestimmten, maximalen Anzahl von Zielobjekten, bzgl. vorgegebener Parameter, insbesondere bzgl. der Streckenlänge zwischen jeweiligem Zielobjekt und aktuellem Standort eines Benutzers, sortiert wird.

8. Navigationssystem, insbesondere für Kraftfahrzeuge, mit einer Steuereinrichtung, **dadurch gekennzeichnet, dass** die Steuereinrichtung zur Durchführung des Verfahrens nach einem der vorhergehenden Ansprüche ausgebildet ist.

## Claims

1. Method for inputting destinations into a navigation system, particularly for motor vehicles, in which a destination memory is used to store destination objects which comprise a plurality of successively arranged words which in turn comprise one or more successively arranged characters, and a destination is ascertained by inputting a character, wherein the input character is compared, for a match, with characters arranged at a predetermined first position within the words of the destination objects stored in the destination memory, and wherein the first input character that is input is compared with a character from each word, a further character is input which is compared, for a match, with characters arranged at a predetermined second position within those words for which a match has been found for the one input character, **characterized in that** the first position indicates the first character within each word and the second position indicates the last character within each word.

2. Method according to Claim 1, **characterized in that** the desired destination is determined by hierarchically linking the comparison results for the first position to the comparison results for the second position.

3. Method according to Claim 1, wherein the destination objects which comprise words for which a match has been obtained for the one input character are stored in a buffer store, **characterized in that** a further character is input, wherein the further character is compared, for a match, with characters arranged at the predetermined first position in those words which are associated with destination objects which have been stored in the buffer store and which are arranged subsequently in relation to a word for which a match has been obtained for the one character.

4. Method according to one of the preceding claims, **characterized in that** the destination input is made by selecting different categories with which respective destination objects are associated.

5. Method according to Claim 4, **characterized in that** a user is asked first of all to input a destination and then to select a category or first of all to select a category and then to input a destination.

6. Method according to one of the preceding claims, **characterized in that** the destination input is made by selecting different key words with which respective destination objects are associated.

7. Method according to one of the preceding claims, wherein input of the destination is followed by creation of a list of the ascertained destination objects, **characterized in that** the list is sorted in respect of prescribed parameters, particularly in respect of the path length between the respective destination object and the current location of a user, particularly when a predetermined, maximum number of destination objects is exceeded.

8. Navigation system, particularly for motor vehicles, having a control device, **characterized in that** the control device is designed to carry out the method according to one of the preceding claims.

## Revendications

1. Procédé d'introduction de destinations dans un système de navigation, en particulier pour véhicules automobiles, dans lequel des objets de destination constitués de plusieurs mots disposés les uns derrière les autres et qui sont eux-mêmes constitués d'un ou plusieurs caractères disposés les uns derrière les autres sont placés dans une mémoire de destinations,
un caractère étant introduit pour déterminer la destination,
le caractère introduit étant comparé à des caractères disposés en une première position préalablement déterminée dans les mots des objets de destinations déposés dans la mémoire de destinations en vue de vérifier leur correspondance,
le caractère introduit en premier étant comparé à un caractère de chaque mot, un autre caractère étant introduit et comparé à des caractères disposés en une deuxième position préalablement définie dans chaque mot pour lequel une correspondance avec un caractère introduit a été constatée, en vue d'établir une correspondance éventuelle,
**caractérisé en ce que**
la première position indique le premier caractère de chaque mot et la deuxième position le dernier caractère de chaque mot.

2. Procédé selon la revendication 1, **caractérisé en ce que** pour déterminer la destination souhaitée, les résultats de la comparaison pour la première position sont associés hiérarchiquement au résultat de la comparaison pour la deuxième position.

3. Procédé selon la revendication 1, dans lequel les objets de destination qui contiennent des mots pour lesquels une correspondance a été obtenue pour le caractère introduit sont conservés dans une mémoire intermédiaire, **caractérisé en ce qu'**un autre caractère est introduit, l'autre caractère étant comparé à des caractères disposés en la première position préalablement définie des mots qui appartiennent à des objets de destination qui ont été placés dans la mémoire intermédiaire, en vue d'établir une éventuelle correspondance, et étant ensuite associé à un mot pour lequel une correspondance a été obtenue pour le premier caractère.

4. Procédé selon l'une des revendications précédentes, **caractérisé en ce que** l'introduction de la destination s'effectue en sélectionnant différentes catégories à chacune desquelles des objets de destination sont associés.

5. Procédé selon la revendication 4, **caractérisé en ce qu'**un utilisateur est d'abord invité à introduire une destination et ensuite à sélectionner une catégorie, ou d'abord à sélectionner une catégorie et ensuite à introduire une destination.

6. Procédé selon l'une des revendications précédentes, **caractérisé en ce que** l'introduction des destinations s'effectue en sélectionnant différents mots clés à chacun desquels des objets de destination sont associés.

7. Procédé selon l'une des revendications précédentes, dans lequel après introduction de la destination, une liste des objets de destination déterminée est établie, **caractérisé en ce que** la liste est triée, en particulier lorsqu'un nombre maximum préalablement défini d'objets de destination ou de paramètres prédéterminés, en particulier de la longueur de parcours entre chaque objet de destination et le site de l'utilisateur, est dépassé.

8. Système de navigation, en particulier pour véhicules automobiles, doté d'un dispositif de commande, **caractérisé en ce que** le dispositif de commande est configuré pour exécuter le procédé selon l'une des revendications qui précèdent.
